(19) Europäisches Patentamt
European Patent Office
Office européen des brevets

(11) **EP 2 618 124 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **13151770.8**

(22) Anmeldetag: **18.01.2013**

(51) Int Cl.:
*G01M 1/22* (2006.01)      *G01M 1/02* (2006.01)
*G01M 1/08* (2006.01)      *G01L 5/00* (2006.01)

(54) **Verfahren zur Korrektur der permanenten Kalibrierung und Kraft messende Auswuchtmaschine**

Method for correcting permanent calibration and force-measuring balancing machine

Procédé de correction du calibrage permanent et machine d'équilibrage mesurant la force

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2012 DE 102012100531**

(43) Veröffentlichungstag der Anmeldung:
**24.07.2013 Patentblatt 2013/30**

(73) Patentinhaber: **Schenck RoTec GmbH**
**64293 Darmstadt (DE)**

(72) Erfinder: **Trukenmüller, Kai**
**64283 Darmstadt (DE)**

(74) Vertreter: **Haar, Lucas Heinz Jörn et al**
**haarpatent**
**Patentanwälte Krämer Meyer**
**Goethestraße 2**
**61231 Bad Nauheim (DE)**

(56) Entgegenhaltungen:
**US-A- 4 750 361      US-A- 5 450 337**
**US-A- 5 627 762**

EP 2 618 124 B1

**Beschreibung**

Die Erfindung betrifft ein Verfahren zur Korrektur der empirisch ermittelten permanenten Kalibrierung einer Kraft messenden Auswuchtmaschine und eine das Verfahren verwendende Kraft messenden Auswuchtmaschine.

Der Zusammenhang zwischen Unwucht und Schwingung wird bei jeder Auswuchtmaschine empirisch durch die Kalibrierung bestimmt. Bei der Unwuchtmessung im unterkritischen Bereich, wofür Kraft messende Auswuchtmaschinen verwendet werden, sind die Trägheitskräfte im Vergleich zu den Federkräften vernachlässigbar, die Rotoreigenschaften Masse und Trägheitsmoment und die Schwerpunktlage des Rotors in Bezug auf seine Lagerung können daher bei der Unwuchtmessung unberücksichtigt bleiben. Daher ist eine permanente Kalibrierung harter, Kraft messender Auswuchtmaschinen unabhängig von den mechanischen Eigenschaften des eingelagerten Rotors möglich. Lediglich die Steifigkeit der Lagerständer und die Drehzahl gehen in die Parameter der Unwuchtmessung ein. Da die Steifigkeit ein Maschinenparameter ist, der sich im Normalfall wenig ändert, erfolgt die Unwuchtmessung mit einer solchen Maschine immer auf die gleiche Weise unabhängig vom Rotor. Man spricht daher von permanenter Kalibrierung.

Durch die Anwendung der permanenten Kalibrierung kann bei Kraft messenden Auswuchtmaschinen die Unwuchtmessung unabhängig vom Rotor in einem Messlauf erfolgen. Dies ist ein Vorteil gegenüber wegmessenden Maschinen, die für jeden Rotortyp neu kalibriert werden müssen, was für eine Unwuchtmessung einen Aufwand von drei Messläufen bedeutet.

Physikalisch besteht der Unterschied zwischen den beiden Maschinentypen im Verhältnis der Rotordrehzahl zur Maschineneigenfrequenz. Unterkritisch betriebene Maschinen zählen zum Kraft messenden Typ und werden harte Auswuchtmaschinen genannt, überkritisch betriebene Maschinen zählen zum wegmessenden Typ und werden weiche Maschinen genannt. Der Übergang zwischen beiden Maschinentypen ist nicht fest. Je schneller eine harte, Kraft messende Maschine betrieben wird, desto mehr verliert sie von ihrer Kraft messenden Eigenschaft und damit der Möglichkeit einer vom Rotor unabhängigen permanenten Kalibrierung. Wird sie auch bei schnelleren Drehzahlen mit permanenter Kalibrierung betrieben, so entsteht durch Annäherung an eine kritische Resonanzdrehzahl ein systematischer Messfehler in Abhängigkeit von der Maschine und den dynamischen Eigenschaften des Rotors. Der relative Messfehler ist in etwa das Quadrat des Frequenzverhältnisses von Drehzahl zu Eigenfrequenz.

Als Grenzwert mit einem relativen Messfehler < 10% wird daher für jede permanent kalibrierte Maschine ein sogenannter $Gn^2$-Grenzwert spezifiziert, der aus Rotormasse $G$ und Drehzahl $n$ berechnet wird und nicht überschritten werden darf. Der Grenzwert entspricht einer Resonanzannäherung von einem Drittel. Ist das Produkt aus Rotormasse und dem Quadrat der maximalen Messdrehzahl größer als der spezifizierte $Gn^2$-Grenzwert, dann können größere Messfehler auftreten; die permanente Kalibrierung ist nicht mehr gültig.

Aus DE 40 28 656 A1 ist ein Verfahren bekannt, welches das Ziel hat, bei permanentkalibrierten, kraftmessenden Auswuchtmaschinen eine zu große Annäherung an eine Resonanzdrehzahl und eine dadurch bedingte Verfälschung des Messergebnisses zu erkennen. Hierbei werden während des Unwuchtmesslaufs mindestens drei Unwuchtmesswerte bei verschiedenen Messdrehzahlen ermittelt, aus denen von einer Auswerteschaltung mindestens zwei Differenzwerte der drehzahlmäßig benachbarten Unwuchtmesswerte gebildet werden. Wird durch die Auswerteschaltung festgestellt, dass die Differenzwerte zwischen den benachbarten höheren Messdrehzahlen im Verhältnis größer sind als die zwischen den benachbarten niedrigeren Messdrehzahlen, so wird eine Resonanzüberhöhung festgestellt und signalisiert.

Es ist weiterhin aus CN 1 02 175 394 A ein Verfahren zur permanenten Kalibrierung einer Auswuchtmaschine mit weicher Lagerung bekannt, bei welchem die Eigenfrequenz des Schwingungssystems aus Rotorlagerung und gemessenem Rotor anhand von während der Motorbeschleunigung gemessenen Drehfrequenzen und Amplituden der Rotorlagerung berechnet werden und der Einfluss der Rotormasse auf die Schwingungsamplitude durch Abbildung beschrieben und der Einfluss der Masse und Drehgeschwindigkeit des Rotors auf die Kalibrierung beseitigt wird.

Eine Vorrichtung zur Bestimmung einer Unwucht an rotierenden Bauteilen im Allgemeinen ist aus US 5 627 762 A bekannt.

Aus US 5 450 337 A ist eine Vorrichtung zur Korrektur der Unwucht an einem Rotor bekannt, mit der ein gemessener Unwuchtvektor in eine horizontale und eine vertikale Komponente aufgeteilt wird und die Komponenten bereinigt werden,

US 5 172 325 A offenbart ein Verfahren zum Ausgleich von Unwucht, bei dem der Ausgleich lediglich an zugänglichen Stellen stattfindet, jedoch Vibrationen an diesen Stellen für den Ausgleich berücksichtigt werden, die durch Unwucht an unzugänglichen Stellen verursacht werden. Durch Anpassung der Ausgleichsposition und der Ausgleichsmasse wird versucht, die Vibration möglichst gering zu halten.

Der Erfindung liegt die Aufgabe zugrunde ein Verfahren anzugeben, welches den systematischen Messfehler der permanenten Kalibrierung korrigiert und bei Kraft messenden Auswuchtmaschinen eine den Anforderungen genügende Messung bei höherem $Gn^2$-Wert und entsprechend größerer Annäherung an die Resonanzfrequenz ermöglicht.

Die Aufgabe wird nach der Erfindung durch das in Patentanspruch 1 angegebene Verfahren gelöst. Vorteilhafte Ausgestaltungen des Verfahrens sind in den weiteren Ansprüchen angegeben.

Bei dem Verfahren nach der Erfindung werden aus der Masse eines in der Auswuchtmaschine gelagerten, auszuwuchtenden Rotors, der mitschwingenden Masse der Lagerständer, der Steifigkeit der Lagerständer und dem Abstand der Rotorlager der Lagerständer die Eigenfrequenzen des auszuwuchtenden Rotors in translatorischer Richtung und in rotatorischer Richtung berechnet. Die translatorische Richtung entspricht der Messrichtung von Messaufnehmern der Auswuchtmaschine und die rotatorische Richtung ist um eine zur Messrichtung der Messaufnehmer und zur Drehachse des Rotors senkrechte Achse drehend. Aus den Eigenfrequenzen und der Drehfrequenz des Rotors wird ein Frequenzgang berechnet und der permanenten Kalibrierung hinzugefügt.

Das Verfahren nach der Erfindung hat den Vorteil, dass der Anwendungsbereich harter, Kraft messender Auswuchtmaschinen wesentlich erweitert werden und mit einer Kraft messenden Auswuchtmaschine bei gleichem Messfehler ein Rotor bei einer, beispielsweise um den Faktor 2 bis 3, höheren Drehzahl gemessen werden kann. Das Verfahren ist einfach und mit geringem Zeitaufwand durchführbar. Für die Rechnung zur Korrektur der permanenten Kalibrierung werden neben der Drehzahl nur Maschinenparameter und die Masse des auszuwuchtenden Rotortyps benötigt. Die Maschinenparameter müssen nur einmal bestimmt werden und können dann für alle Anwendungen in einem Speicher bereitgehalten und diesem entnommen werden. In der Praxis ist daher nur die Masse des jeweiligen Rotors zu bestimmen, die aus den Geometrie- und Materialdaten oder durch Wiegen des Rotors gewonnen werden kann. Zum Wiegen des Rotors können auch an den Rotorlagern der Auswuchtmaschine Kraftmesszellen angeordnet sein.

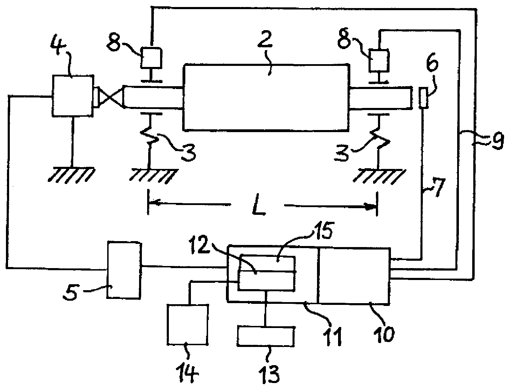

Die Erfindung wird nachfolgend anhand eines in der Zeichnung dargestellten Ausführungsbeispiels näher erläutert. Die Zeichnung zeigt den prinzipiellen Aufbau einer harten, Kraft messenden Auswuchtmaschine 1 zur Messung der Unwucht eines Rotors 2 mit der Masse $m_R$, beispielsweise einer Welle. Der Rotor 2 ist in federnden Lagerständern 3 mit einer Steifigkeit $c$ und einer mitschwingenden Masse $M_s$ drehbar gelagert und kann durch einen motorischen Antrieb 4 drehend angetrieben werden. Der Antrieb 4 ist an eine Steuereinrichtung 5 zur Vorgabe und Regelung der Antriebsdrehzahl angeschlossen. Die Drehfrequenz $\Omega$ des Rotors wird von einem Drehfrequenzsensor 6 erfasst und einer Einrichtung zur Signalverarbeitung und Signalauswertung übermittelt. An den Lagerständern 3 sind für jede Lagerebene Messaufnehmer 8 angebracht, welche die Kraftwirkung des Rotors 2 auf die Lagerständer 3, beispielsweise mit Tauchspulen, in einer vorgegebenen Richtung erfassen. Der Abstand der Lagerebenen ist mit L bezeichnet. Die Messaufnehmer 8 sind über Leitungen 9 und der Drehfrequenzsensor 6 über eine Leitung 7 mit einer Einrichtung 10 zur Signalverarbeitung verbunden. Von der Einrichtung 10 werden die Messsignale der Sensoren 6, 8 verstärkt und digitalisiert und dann an eine Auswerteeinrichtung 11 übertragen, die einen zur Signalauswertung programmierten elektronischen Rechner 12 und einen Datenspeicher 15 umfasst und mit einer Eingabevorrichtung 13 verbunden ist. Über die Eingabevorrichtung 13 werden rotorspezifische Daten, wie Abmessungs- und Formdaten, maschinenspezifische Daten, wie mitschwingende Masse und Steifigkeit der Lagerständer und lagespezifische Daten, wie Abstände und Lage der Lager- und Wuchtebenen, der Auswerteeinrichtung 11 vorgegeben und für die Berechnungen gespeichert. Die Auswerteeinrichtung 11 berechnet aus empfangenen Messsignalen der Sensoren 6, 8 und vorgegebenen Daten einen oder mehrere auszugleichende Unwuchtwerte nach Betrag und Richtung. Die Ergebnisse einer Auswertungsrechnung werden auf einem an den Rechner 12 angeschlossenen Bildschirm 14 sichtbar gemacht.

Die Rotoraufnahme einer Auswuchtmaschine ist ein schwingungsfähiges System, dessen Dynamik in erster Näherung durch das Modell eines Ein-Massen-Schwingers mit Unwuchterregung beschrieben werden kann. Hierbei bezeichnet **U** die Unwucht, **m** die Masse, **c** die Federsteifigkeit, $\Omega$ die Kreisfrequenz der Rotation und $\eta$ das Frequenzverhältnis

$$\eta = \Omega\sqrt{\frac{m}{c}}.$$

Der Amplitudenfrequenzgang der unwuchterregten Schwingung lautet

$$\hat{x} = \frac{U}{m}\frac{\eta^2}{1-\eta^2} = \frac{U\Omega^2}{c}\frac{1}{1-\eta^2}$$

Der hintere Quotient lässt sich in eine Taylor-Reihe entwickeln

$$\frac{1}{1-\eta^2} = 1 + \eta^2 + \eta^4 + \eta^6 + \cdots \qquad \eta < 1.$$

Wenn $\eta$ sehr klein ist, spielen die höheren Potenzen keine Rolle. Je größer $\eta$ wird, desto mehr Glieder müssen berücksichtigt werden, um die Funktion zu approximieren. Die Kraft messende Maschine vernachlässigt die Abhängigkeit von $\eta$. Sie nimmt an, dass der Schwingweg mit $\Omega^2$ ansteigt. Der Fehler, der dadurch gemacht wird, ist in erster Ordnung $\eta^2$. Das heißt, bei einer Resonanzannäherung von 30% ist der Fehler 9%, bei einer Drehzahl bei halber Resonanzfrequenz ist der Fehler in der Unwuchtamplitude 25%. Um den Fehler zu korrigieren, benötigt die Auswuchtmaschine mehr Informationen. Sie muss wissen wo die Resonanzfrequenz liegt.

Die Gleichung der Unwuchtmessung mit zwei Freiheitsgraden lautet im symmetrischen Fall

$$\begin{pmatrix} \omega_1^2 - \Omega^2 & \omega_1^2 - \Omega^2 \\ -\omega_2^2 + \Omega^2 & \omega_2^2 - \Omega^2 \end{pmatrix} \begin{pmatrix} x_1 \\ x_2 \end{pmatrix} = \Omega^2 \begin{pmatrix} \frac{2}{m}(u_1 + u_2) \\ \frac{L^2}{2\theta}(u_2 - u_1) \end{pmatrix}$$

mit den Eigenfrequenzen in der Messrichtung der Messaufnehmer entsprechender translatorischer Richtung $\omega_1 = \sqrt{\frac{2c}{m}}$ und in rotatorischer Richtung um eine zur Messrichtung und zur Drehachse des Rotors senkrechten Achse $\omega_2 = \sqrt{\frac{cL^2}{2\theta}}$

Die Gleichung kann in Matrixform umgeschrieben werden

$$Q\vec{x} = \Omega^2 HKQ\vec{U}$$

mit

$$\vec{x} = \begin{pmatrix} x_1 \\ x_2 \end{pmatrix} \qquad \vec{U} = \begin{pmatrix} U_1 \\ U_2 \end{pmatrix} \qquad Q = \begin{pmatrix} 1 & 1 \\ -1 & 1 \end{pmatrix}$$

$$H = \begin{pmatrix} \frac{1}{1-\eta_1^2} & 0 \\ 0 & \frac{1}{1-\eta_2^2} \end{pmatrix} \qquad K = \begin{pmatrix} \frac{1}{c} & 0 \\ 0 & \frac{1}{c} \end{pmatrix} \qquad \eta_1 = \frac{\Omega}{\omega_1} \qquad \eta_2 = \frac{\Omega}{\omega_2}.$$

Der Zusammenhang zwischen Schwingweg und Unwucht lautet daher

$$\vec{U} = \frac{1}{\Omega^2}(Q^{-1}HKQ)^{-1}\vec{x}$$

In dieser Formulierung wird der Frequenzgang **H** von der Maschinenparametermatrix K getrennt. Im Grenzfall $\eta$ gegen 0 geht **H** in die Einheitsmatrix über. Die Formulierung ist vergleichbar mit der Messgleichung der permanenten Kalibrierung

$$\vec{U} = \frac{1}{\Omega^2}P\vec{x}$$

Die permanente Kalibriermatrix P folgt zu

$$P^{-1} = Q^{-1}KQ.$$

Sie besteht aus der Matrix der Maschinenparameter *K* transformiert in die symmetrischen Koordinaten. Der Frequenzgang *H* fehlt. Die Korrektur der permanenten Kalibrierung besteht darin, den Frequenzgang *H* wieder hinzuzufügen. Bei der vorliegenden Formulierung wird die Kalibriermatrix $P$ direkt aus dem Maschinenmodell hergeleitet. In der Praxis geschieht das empirisch über die Kalibrierung mit Testläufen. Dennoch kann die Korrektur auf die gleiche Weise durchgeführt werden. Die korrigierte permanente Kalibriermatrix $P_k$ wird berechnet, indem die empirisch ermittelte permanente Kalibrierung $P$ mit der Korrekturmatrix $\boldsymbol{H}$ verrechnet wird

$$P_k^{-1} = Q^{-1} H Q P^{-1}.$$

Für die Korrektur der permanenten Kalibrierung wird also lediglich $\boldsymbol{H}$ und hierfür die Eigenfrequenzen $\omega_1$ und $\omega_2$ benötigt. Diese müssen für jeden Rotortyp des Maschine-Rotor-Systems berechnet werden. Vereinfachend können wir die Annahme machen, der Rotor sei symmetrisch und der Trägheitsradius des Rotors sei $1/\sqrt{12}$ des Lagerabstands. Dies ist der Wert eines langgestreckten Zylinders mit der Länge des Lagerabstands. Es muss vom Bediener nur die Masse des Rotors $m_R$ eingegeben werden, dann können die Eigenfrequenzen $\omega_1$, $\omega_2$ berechnet werden

$$\omega_1^2 \;=\; \frac{2c}{2M_s + m_R}$$

$$\omega_2^2 \;=\; \frac{2c}{2M_s + 4\frac{\theta_R}{L^2}}.$$

$\boldsymbol{M_s}$ bezeichnet die mitschwingende Masse und c die Steifigkeit des Lagerständers. Das Trägheitsmoment des Rotors quer zur Rotationsachse $\theta_R$ kann als

$$\theta_R = \frac{m_R L^2}{12}$$

angenommen werden.

Im Normalfall, wenn der Rotor nicht stark überhängt, ist der Trägheitsradius des Rotors $\sqrt{\theta_R / m_R}$ kleiner als der halbe Lagerabstand. In diesem Fall ist $\omega_2 > \omega_1$, d.h. die translatorische Eigenfrequenz ist die niedrigere und die Korrektur der Resonanzannäherung in Rotationsrichtung ist geringer. Deshalb ist hierbei die korrekte Angabe der Masse $m_R$ wichtiger als die korrekte Angabe des Trägheitsmoments.

Lagerständersteifigkeit c und mitschwingende Masse $M_s$ sind Maschinenkonstanten die für jede Maschine (bzw. Maschinentyp) einmalig ermittelt werden müssen, damit die Berechnung der Matrix $H$ und die Korrektur der permanenten Kalibrierung möglich ist. Die Bestimmung der Maschinenkonstanten erfolgt aus den Hochlaufkurven zweier Hochläufe mit einem symmetrischen Testrotor bis etwa 80% der Resonanzdrehzahl. Beim ersten Lauf hat der Testrotor keine zusätzliche Unwucht, beim zweiten wird eine statische Testunwucht angesetzt. Es werden an beiden Lagerständern 3 die Schwinggeschwindigkeiten mit relativ und absolut messenden Tauchspulen als Messaufnehmer 8 gemessen. Aus den gemessenen Schwinggeschwindigkeiten und dem Wert der Testunwucht werden die Maschinenparameter $c$ und $M_s$ berechnet und in dem Speicher 15 des Rechners 12 abgelegt. Der nach dem beschriebenen Verfahren programmierte Rechner 12 greift auf die Maschinenparameter $c$ und $M_s$ und die eingegebene Masse $m_R$ des Rotors 2 zu und korrigiert entsprechend die permanente Kalibrierung jeweils bei der Auswertungsrechnung.

**Patentansprüche**

1. Verfahren zur Korrektur der empirisch ermittelten permanenten Kalibrierung einer Kraft messenden Auswuchtmaschine (1) zur Messung einer Unwucht eines in der Auswuchtmaschine (1) gelagerten, auszuwuchtenden Rotors (2), **dadurch gekennzeichnet, dass** eine Masse ($m_R$) des Rotors (2) aus Geometrie- und Materialdaten oder durch Wiegen des Rotors (2) bestimmt wird, aus der Masse ($m_R$) des in der Auswuchtmaschine (1) gelagerten, auszuwuchtenden Rotors (2), einer mitschwingenden Masse ($M_s$) der Lagerständer (3), einer Steifigkeit ($c$) der Lagerständer (3) und einem Abstand ($L$) der Rotorlager der Lagerständer (3) die Eigenfrequenzen ($\omega_1$, $\omega_2$) des auszuwuchtenden Rotors (2) in der Messrichtung von Messaufnehmern (8) entsprechender, translatorischer Richtung und in rotatorischer Richtung um eine zur Messrichtung und zur Drehachse des Rotors (2) senkrechte Achse berechnet werden und ein aus den Eigenfrequenzen ($\omega_1$, $\omega_2$) und der Drehfrequenz ($\Omega$) des Rotors (2) berechneter Frequenzgang der permanenten Kalibrierung hinzugefügt wird, wobei die permanente Kalibrierung in Form einer Kalibriermatrix ($P$) bestimmt und mit einer den Frequenzgang beschreibenden Korrekturmatrix ($H$) nach der Formel

$$P_k^{-1} = Q^{-1} H Q P^{-1}.$$

zu der korrigierten permanenten Kalibriermatrix ($P_k$) verrechnet wird, wobei die Matrix $Q = \begin{pmatrix} 1 & 1 \\ -1 & 1 \end{pmatrix}$ ist und

die Korrekturmatrix ($H$) aus der Drehfrequenz ($\Omega$) des auszuwuchtenden Rotors (2) und den berechneten Eigenfrequenzen ($\omega_1$, $\omega_2$) berechnet wird, wobei die Drehfrequenz $\Omega$ des Rotors von einem Drehfrequenzsensor (6) erfasst wird, wobei die Eigenfrequenzen $\omega_1$, $\omega_2$ errechnet werden aus

$$\omega_1^2 = \frac{2c}{2M_s + m_R}$$

$$\omega_2^2 = \frac{2c}{2M_s + 4\frac{\theta_R}{L^2}}.$$

und wobei $M_s$ die mitschwingende Masse und $c$ die Steifigkeit des Lagerständers bezeichnet und das Trägheitsmoment des Rotors quer zur Rotationsachse $\theta_R$ als

$$\theta_R = \frac{m_R L^2}{12}$$

angenommen wird.

2. Verfahren nach Anspruch 1, **dadurch gekennzeichnet, dass** die Korrekturmatrix nach folgender Formel berechnet wird:

$$H = \begin{pmatrix} \frac{1}{1-\eta_1^2} & 0 \\ 0 & \frac{1}{1-\eta_2^2} \end{pmatrix}$$

wobei

$$\eta_1 = \frac{\Omega}{\omega_1}$$

und

$$\eta_2 = \frac{\Omega}{\omega_2}$$

ist.

3. Kraft messende Auswuchtmaschine (1) mit federnden Lagerständern (3), an denen Messaufnehmer (8) angebracht sind, welche die Kraftwirkung eines Rotors (2) auf die Lagerständer (3) erfassen, mit einem Drehfrequenzsensor (6), der die Drehfrequenz (Ω) des Rotors (2) erfasst, und mit einer Auswerteeinrichtung (11), die zur Signalauswertung einen mit einer empirisch ermittelten, permanenten Kalibrierung programmierten elektronischen Rechner (12) und einen die empirisch ermittelten Maschinenparameter Steifigkeit (*c*) und mitschwingende Masse ($M_s$) enthaltenden Datenspeicher aufweist, wobei eine Masse ($m_R$) des Rotors (2) aus Geometrie- und Materialdaten oder durch Wiegen des Rotors (2) bestimmbar ist **dadurch gekennzeichnet, dass** der elektronische Rechner (12) ein Programm zur Korrektur der empirisch ermittelten permanenten Kalibrierung nach dem Verfahren nach einem der vorhergehenden Ansprüche aufweist.

**Claims**

1. Method for correcting the permanent calibration of a force-measuring balancing machine (1), which calibration is detected empirically, in order to measure an unbalance of a rotor (2) that is mounted in the balancing machine (1) and is to be balanced, **characterised in that** a mass ($m_R$) of the rotor (2) is determined from geometric and material data or by weighing the rotor (2), the natural frequencies ($\omega_1$, $\omega_2$) of the rotor (2) to be balanced are calculated, in a translatory direction corresponding to the measurement direction of measuring sensors (8) and in the rotatory direction about an axis perpendicular to the measurement direction and to the rotational axis of the rotor (2), from the mass ($m_R$) of the rotor (2) that is mounted in the balancing machine (1) and is to be balanced, from a co-oscillating mass ($M_S$) of the mounting stands (3), from a rigidity (c) of the mounting stands (3) and from a distance (L) of the rotor bearings of the mounting stands (3), and a frequency response calculated from the natural frequencies ($\omega_1$, $\omega_2$) and the rotational frequency (Ω) of the rotor (2) is added to the permanent calibration, the permanent calibration being determined in the form of a calibration matrix (P) and being offset with respect to the corrected permanent calibration matrix ($P_k$) against a correction matrix (H) that describes the frequency response according to formula

$$P_k^{-1} = Q^{-1}HQP^{-1}.$$

,

the matrix being $Q = \begin{pmatrix} 1 & 1 \\ -1 & 1 \end{pmatrix}$ and the correction matrix (H) being calculated from the rotational frequency (Ω) of the rotor (2) to be balanced and the calculated natural frequencies ($\omega_1$, $\omega_2$), the rotational frequency Ω of the rotor being detected by a rotational frequency sensor (6), the natural frequencies $\omega_1$, $\omega_2$ being calculated from

$$\omega_1^2 = \frac{2c}{2M_s + m_R}$$

$$\omega_2^2 = \frac{2c}{2M_s + 4\frac{\theta_R}{L^2}}.$$

and $M_S$ signifying the co-oscillating mass and c signifying the rigidity of the mounting stand and the moment of inertia of the rotor being assumed transversely with respect to the rotational axis $\theta_R$ as

$$\theta_R = \frac{m_R L^2}{12}$$

.

2. Method according to claim 1, **characterised in that** the correction matrix is calculated according to the following formula:

$$H = \begin{pmatrix} \frac{1}{1-\eta_1^2} & 0 \\ 0 & \frac{1}{1-\eta_2^2} \end{pmatrix}$$

in which

$$\eta_1 = \frac{\Omega}{\omega_1}$$

and

$$\eta_2 = \frac{\Omega}{\omega_2}$$

3. Force-measuring balancing machine (1) comprising resilient mounting stands (3) to which measuring sensors (8) are attached which detect the dynamic effect of a rotor (2) on the mounting stands (3), comprising a rotational frequency sensor (6) which detects the rotational frequency ($\Omega$) of the rotor (2), and comprising an evaluation device (11) which has, for signal evaluation, an electronic computer (12) programmed using a permanent calibration that is detected empirically and a data memory containing the machine parameters, which are detected empirically, of rigidity ($c$) and co-oscillating mass ($Ms$), it being possible to determine a mass ($m_R$) of the rotor (2) from geometric and material data or by weighing the rotor (2), **characterised in that** the electronic computer (12) has a program for correcting the permanent calibration that is detected empirically according to the method according to either of the preceding claims.

## Revendications

1. Procédé de correction de la calibration permanente déterminée de façon empirique d'une machine d'équilibrage (1) à mesure de force pour mesurer un balourd d'un rotor (2) à équilibré logé dans la machine d'équilibrage (1), **caractérisé en ce qu'**une masse ($m_R$) du rotor (2) est déterminée à partir de données géométriques et du matériau ou par pesée du rotor (2), les fréquences propres ($\omega_1, \omega_2$) du rotor (2) à équilibrer sont calculées à partir de la masse ($m_R$) du rotor (2) à équilibrer logé dans la machine d'équilibrage (1), d'une masse co-oscillante ($M_s$) des supports de palier (3), d'une rigidité ($c$) des supports de palier (3) et d'une distance (L) des paliers de rotor des supports de palier (3), dans une direction de translation correspondant à la direction de mesure de capteurs de mesure (8) et dans la direction de rotation autour d'un axe perpendiculaire à la direction de mesure et à l'axe de rotation du rotor (2), et une réponse fréquentielle calculée à partir des fréquences propres ($\omega_1, \omega_2$) et de la fréquence de rotation ($\Omega$) du rotor (2) est ajoutée à la calibration permanente, la calibration permanente étant déterminé sous la forme d'une matrice de calibrage ($P$) et étant déterminée sous la forme d'une matrice de calibrage permanente corrigée ($P_k$) avec une matrice de correction ($H$) décrivant la réponse fréquentielle selon la formule

$$P_k^{-1} = Q^{-1}HQP^{-1},$$

la matrice étant $Q = \begin{pmatrix} 1 & 1 \\ -1 & 1 \end{pmatrix}$ et la matrice de correction ($H$) étant calculée à partir de la fréquence de rotation ($\Omega$) du rotor (2) à équilibrer et des fréquences propres ($\omega_1, \omega_2$) calculées, la fréquence de rotation ($\Omega$) du rotor étant détectée par un capteur de fréquence de rotation (6), les fréquences propres ($\omega_1, \omega_2$) étant calculées à partir de

$$\omega_1^2 = \frac{2c}{2M_s + m_R}$$

$$\omega_2^2 \;=\; \frac{2c}{2M_s + 4\dfrac{\theta_R}{L^2}}.$$

et où $M_s$ est la masse co-oscillante et c la rigidité du support de palier, et le moment d'inertie du rotor transversalement à l'axe de rotation $\theta_R$ étant admis comme valant

$$\theta_R = \frac{m_R L^2}{12}.$$

2. Procédé selon la revendication 1, **caractérisé en ce que** la matrice de correction est calculée selon la formule suivante : $\quad H = \begin{pmatrix} \dfrac{1}{1-\eta_1^2} & 0 \\ 0 & \dfrac{1}{1-\eta_2^2} \end{pmatrix} \quad$ avec

$$\eta_1 = \frac{\Omega}{\omega_1}$$

et

$$\eta_2 = \frac{\Omega}{\omega_2}.$$

3. Machine d'équilibrage (1) à mesure de force avec des supports de palier (3) élastiques sur lesquels sont montés des capteurs de mesure (8) qui détectent l'effet de la force d'un rotor (2) sur les supports de palier (3), avec un capteur de fréquence de rotation (6) qui détecte la fréquence de rotation ($\Omega$) du rotor (2), et avec un dispositif de traitement (11) qui est muni, pour évaluer les signaux, d'un calculateur électronique programmé (12) avec une calibration permanente déterminée de façon empirique et d'une mémoire de données contenant les paramètres de machine déterminés empiriquement de rigidité (c) et de masse co-oscillante ($M_s$), une masse ($m_R$) du rotor (2) pouvant être déterminée à partir de données géométriques et du matériau ou par pesée du rotor (2), **caractérisée en ce que** le calculateur électronique (12) comprend un programme pour corriger la calibration permanente déterminée de façon empirique selon le procédé selon l'une des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4028656 A1
- CN 102175394 A
- US 5627762 A
- US 5450337 A
- US 5172325 A